# EUROPEAN PATENT SPECIFICATION

(11) **EP 0 682 071 B1**
(45) Date of publication and mention of the grant of the patent: **16.07.1997**
(21) Application number: 95201079.1
(22) Date of filing: 26.04.1995
(51) Int. Cl.: C08L 9/00, B60C 1/00

(54) **Tire tread with quantitative silica reinforcement**
Lauffläche mit quantitativer Kieselsäureverstärkung
Bande de roulement renforcée quantitativement par de la silice

(30) Priority: 05.05.1994 US 238841
(43) Date of publication of application: 15.11.1995
(73) Proprietor: THE GOODYEAR TIRE & RUBBER COMPANY, Akron, Ohio 44316-0001 (US)
(72) Inventor: Zanzig, David John, Uniontown, OH 44685 (US); Sandstrom, Paul Harry, Tallmadge, OH 44278 (US); Verthe, John Joseph Andre, Kent, OH 44240 (US); Crawford, Michael Julian, Akron, OH 44303 (US)
(74) Representative: Leitz, Paul

(56) References cited:
- EP-A- 0 524 339
- US-A- 5 162 409

## Description

### Field

This invention relates to a tire having a rubber tread which is quantitatively reinforced with silica. In one aspect, the tread is comprised of a specified multiplicity of rubbers, namely a backbone of isoprene/butadiene rubber, natural rubber and halogenated isobutylene/p-methylstyrene copolymer, which is reinforced with a quantitative amount of silica and particularly a combination of a quantitative amount of silica together with a minor amount of carbon black.

### Background

Pneumatic rubber tires are conventionally prepared with a rubber tread which can be a blend of various rubbers which is typically reinforced with carbon black.

In one aspect, rubbers are evaluated, selected and blended for a purpose of achieving desired tire tread properties and particularly a balance of tire tread characteristic properties, mainly, rolling resistance, traction and wear.

For various applications utilizing rubber including applications such as tires and particularly tire treads, sulfur cured rubber is utilized which contains substantial amounts of reinforcing filler(s). Carbon black is commonly used for such purpose and normally provides or enhances good physical properties for the sulfur cured rubber. Particulate silica, particularly precipitated silica, is also sometimes used for such purpose, particularly when the silica is used in conjunction with a coupling agent. In some cases, a combination of silica and carbon black is utilized for reinforcing fillers for various rubber products, including treads for tires.

It is important to appreciate that conventionally carbon black is considered to be a more effective reinforcing filler for rubber tire treads than silica if the silica is used without a coupling agent.

Indeed, at least as compared to carbon black, there tends to be a lack of, or at least an insufficient degree of, physical and/or chemical bonding between the silica particles and the rubber elastomers to enable the silica to become a reinforcing filler for the rubber for most purposes, including tire treads, if the silica is used without a coupler. While various treatments and procedures have been devised to overcome such deficiencies, compounds capable of reacting with both the silica surface and the rubber elastomer molecule, generally known to those skilled in such art as coupling agents, or couplers, are often used. Such coupling agents, for example, may be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents may be composed of a constituent component, or moiety, (such as, for example, an organo-silane) capable of reacting or otherwise combining with the silica surface and, also a constituent component, or moiety, (such as, for example, sulfur) capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, a silane of a coupling agent can apparently form a bond to the silica surface, possibly through hydrolysis, and the rubber reactive component of the coupling agent, such as sulfur, can combine with the rubber itself. The rubber reactive component of the coupler can be somewhat temperature sensitive at higher temperatures than a silane component and tend to combine with the rubber during the final and higher temperature sulfur vulcanization stage and, thus, subsequent to the rubber/silica/coupler mixing stage and, therefore, after a silane group of the coupler has combined with the silica. However, some degree of combination, or bonding, may perhaps occur between the rubber-reactive component of the coupler and the rubber during an initial rubber/silica/coupler mixing stage and, thus, prior to a subsequent vulcanization stage.

The rubber-reactive group component of the coupler may be, for example, one or more of groups such as mercapto, amino, vinyl, epoxy, and sulfur groups, and is usually preferably a sulfur moiety.

Numerous coupling agents are taught for use in combining silica and rubber, such as for example, silane coupling agents containing a polysulfide component, or structure, such as bis-(3-triethoxysilylpropyl) tetrasulfide.

For silica reinforced tire treads, **US-A-5 066 721,** in its Comparative Test Example 1 in Table 3 (column 15), discloses the use of solution polymerization prepared SBR containing 50 parts silica for a tire tread. Table 4 (column 17) illustrates the tire preparation. **EP-A-501 227** also discloses the use of a solution polymerization prepared SBR which is silica reinforced and in which is preferenced over an emulsion polymerization prepared SBR. **US-A-4 519 430** discloses a silica rich tire tread which contains solution or emulsion SBR, optionally with polybutadiene rubber and/or polyisoprene rubber together with a mixture of silica and carbon black, with silica being required to be a major component of the silica/carbon black reinforcing filler.

Other patents relating to silicas and silica reinforced tire treads include **US-A-3 451 458; US-A-3 664 403; US-A-3 768 537; US-A-3 884 285; US-A-3 938 574; US-A-4 482 663; US-A-4 590 052; US-A-5 089 554** and **GB-A-1 424 503.**

In another aspect, tire treads have been disclosed which contain a halogenated copolymer of isobutylene and methyl styrene and a relatively minor amount of silica (eg. up to 30 parts by weight silica per 100 parts by weight rubber) together with a silica coupler. For example, see **US-A-5 063 268** and **US-A-5 162 409.**

### Summary and Practice of the Invention

In accordance with this invention, a pneumatic tire is provided having a tread rubber composition comprised of, (A) a combination of three elastomers comprised of (i) 10 to 80, preferably 35 to 70, weight percent of an isoprene/butadiene copolymer rubber containing 5 to 95, preferably 30 to 70, weight percent isoprene and having a Tg in a range of -5 to -95, preferably -35 to -50 or -70 to -90, °C, (ii) 5 to 40, preferably 10 to 25, weight percent of cis 1,4-polyisoprene natural rubber, and (iii) 5 to 40, preferably 5 to 25, percent of at least one halogenated copolymer of isobutylene and p-methyl styrene, wherein the ratio of isobutylene to p-methyl styrene is in a range of 50/1 to 7/1, preferably 20/1 to 9/1, (B) 50 to 110, preferably 50 to 85, phr particulate precipitated silica, (C) at least one silica coupler having a moiety reactive with the silica and another moiety reactive with at least one of said elastomers, and (D) zero to about 50 phr carbon black, wherein the weight ratio of silica to carbon black, if carbon black is used, is at least 1/1 and preferably at least 4/1 and where the total of silica and carbon black, if used, is 60 to 120, preferably 70 to 90 phr.

In further accordance with this invention, the rubber of said tread rubber composition is comprised of (A) 20 to 80 weight percent of said combination of isoprene/butadiene copolymer, natural rubber and halogenated copolymer of isobutylene and p-methyl styrene, and correspondingly (A') 80 to 20 weight percent of at least one other additional elastomer selected from homopolymers of conjugated dienes, such as, for example, isoprene and 1,3-butadiene, copolymers of conjugated dienes such as isoprene and 1,3-butadiene with monomers such as styrene and/or acrylonitrile and terpolymers of styrene/isoprene/butadiene and of styrene/butadiene/acrylonitrile.

Representative examples of such additional elastomers are cis 1,4-polybutadiene rubber, medium vinyl (30-60 percent vinyl content) polybutadiene, styrene/butadiene copolymer rubber (S-SBR and/or E-SBR), 3,4-polyisoprene rubber, butadiene/acrylonitrile copolymer rubber, styrene/isoprene/butadiene terpolymer rubber and styrene/butadiene/acrylonitrile terpolymer rubber.

In one aspect of the invention, a pneumatic tire is provided having a sulfur vulcanized tread comprised of said rubber composition.

The term "phr" as used herein, and according to conventional practice, refers to "parts of a respective material per 100 parts by weight of rubber".

The basic, or backbone, tri-elastomer blend of isoprene/butadiene copolymer rubber, cis 1,4-polyisoprene natural rubber and said halogenated copolymer is an important rubber blend of the invention designed to enhance properties of a tire tread containing a very substantial amount of silica reinforcement.

In the practice of this invention, organic solvent solution (S-SBR) or emulsion (E-SBR) polymerization prepared styrene/butadiene copolymer elastomers can be used.

While the optional emulsion polymerization styrene/butadiene (E-SBR) may have a styrene content in a range of 20 to 55 percent, in one aspect, it is preferred that it has a medium to relatively high styrene content, namely a styrene content in a range of 30 to 55 percent, such SBR is referred to herein as an E-SBR. The relatively high styrene content for the E-SBR is considered beneficial to enhance traction, or skid resistance, for the tire tread.

The presence of the emulsion polymerization prepared SBR itself is considered beneficial to enhance processability of the uncured elastomer composition mixture, especially in comparison to a utilization of a solution polymerization prepared SBR.

By emulsion polymerization prepared E-SBR, it is meant that styrene and 1,3-butadiene are copolymerized as an aqueous emulsion. Such polymerization method is well known to those skilled in such art.

Natural rubber is beneficial for processing and compound tear strength.

The isoprene/butadiene copolymer rubber (IBR) is considered beneficial to reduce the tire's rolling resistance as also evidenced, on a predictability basis by a cured samples thereof exhibiting a suitable lower hysteresis as evidenced by Rebound values. In one aspect, it is considered that the IBR, having a Tg in a range of -70 to -80°C, can contribute predominantly to tire treadwear whereas an IBR with a Tg in a range of -35 to -50°C can contribute predominantly to traction.

The IBR may be conveniently prepared, for example, by solution polymerization of isoprene and 1,3-butadiene under suitable polymerization conditions to achieve a desired Tg range, in its uncured state, of -5°C to -95°C. and a ratio of isoprene to butadiene ratio in a range of 95/5 to 5/95. The Tg refers to the glass transition temperature which can conveniently be determined by a differential scanning calorimeter at a heating rate of 10°C per minute.

The optional cis 1,4-polybutadiene rubber (BR) is considered to be beneficial to enhance the tire tread's wear, or treadwear.

Such BR can be prepared, for example, by organic solution polymerization of 1,3-butadiene.

The BR may be conventionally characterized, for example, by having at least a 90% cis 1,4-content.

The cis 1,4-polyisoprene natural rubber is well known to those having skill in the rubber art.

The halogenated copolymer of isobutylene and p-methyl styrene, as hereinbefore described desirably has a ratio of isobutylene to p-methyl styrene in a range of 12/1 to 8/1.

In practice, the halogenated copolymer may, for example, first be prepared by copolymerizing isobutylene and p-methylstyrene. Then the copolymer may be halogenated with a halogen, such as with bromine by bromination of the isobutylene/p-methylstyrene copolymer which occurs at the paramethyl position, yielding a benzyl bromide functionality. The degree of bromination can be typically varied from 0.5 weight percent to 2.5 weight percent bromine, based on the copolymer of isobutylene and p-methylstyrene. For tire tread applications, it is considered herein that 1.5 weight percent to 2.5 weight percent bromine is preferred.

The following reference provide additional information relating to the preparation of such halogenated copolymers: (i) **D. Kruse** ,*"A New* *Isobutylene Copolymer: Non-tire Uses",* and (ii) **J. V. Fusco**, *Rubber & Plastics News,* February 1, 1993.

Such a halogenated copolymer may, for example, have the following physical characteristics: Mooney viscosity, ML(1+8) at 125°C in a range of 35 to 60 and a Tg in a range of -50 to -60°C.

Typically, the halogen for such halogenation is bromine. Thus, typically the halogenated copolymer is a brominated copolymer of isobutylene and p-methylstyrene.

It is considered herein that the halogenated copolymer is beneficial, at least in part because of its fully saturated backbone and a relatively stable, pendant functionality which is achieved by the aforesaid bromination in the p-methyl position. It is considered herein that the halogenated copolymer is desirable in the tire tread rubber composition in order to improve, or enhance, its traction. It is also considered herein that it enhances tire handling.

Thus, in the practice of this invention, the aforesaid balanced tri-elastomer blend backbone, which can optionally contain additional elastomers, is provided which relies upon silica reinforcement which, in turn, relies on a silica coupler for the silica's reinforcing effect for the rubber blend.

In another aspect, for the purposes of this invention, such rubber tread also may contain carbon black where a weight ratio of silica to carbon black is at least 1.5/1, preferably at least 4/1 and for some applications at least 10/1.

The siliceous pigments used in rubber compounding applications can be used as the silica in this invention, including pyrogenic and precipitated siliceous pigments (silica), although precipitated silicas are preferred.

The siliceous pigments preferably employed in this invention are precipitated silicas such as, for example, those obtained by the acidification of a soluble silicate, e.g., sodium silicate.

The BET surface area of the pigment, as measured using nitrogen gas, is in the range of 100-250, preferably 100 to 200, more preferably 120 to 180, square meters per gram. The BET method of measuring surface area is described in the **Journal of the American Chemical Society**, 1930, Volume 60, page 304.

The silica also typically has a dibutylphthalate (DBP) absorption value in a range of 200 to 400, and usually 250 to 300 cubic centimeter per 100 grams.

Various commercially available silicas may be considered for use in this invention such as, for example silicas commercially available from PPG Industries under the Hi-Sil trademark with designations 210 or 243; silicas available from Rhone-Poulenc, with designations of Z1165MP and Z165GR and silicas available from Degussa AG with designations VN2 and VN3, etc.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typically additions of carbon black, for this invention, if used, are hereinbefore set forth. Typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the **Vanderbilt Rubber Handbook**, 1978, pages 344-346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise about 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those killed in the art, sulfur vulcanizing agents are used in an amount ranging from 0.5 to 4 phr, or even, in some circumstances, up to 8 phr, with a range of from 1.5 to 2.5, sometimes from 2 to 2.5, being preferred.

Accelerators are used to control the time and/or temperature required for vulcanization and to improve the properties of the vulcanizate. Retarders are also used to control the onset of vulcanization. In one embodiment, a single accelerator system may be used, i.e., primary accelerator. Conventionally and preferably, a primary accelerator(s) is used in total amounts ranging from 0.5 to 4, preferably 0.8 to 1.5, phr. In another embodiment, combinations of a primary or/and a secondary accelerator might be used, with the secondary accelerator being used in amounts of 0.05 to 3 phr, for example, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with a coupling agent.

The presence and relative amounts of the above additives are not considered to be an aspect of the present invention which is more primarily directed to the utilization of specified blends of rubbers, particularly the aforesaid backbone of isoprene/butadiene copolymer rubber, natural rubber and halogenated copolymer, in tire treads, in combination with silica and silica coupler.

The tire can be built, shaped, molded and cured by various methods which will be readily apparent to those having skill in such art.

The invention may be better understood by reference to the following examples in which the parts and percentages are by weight unless otherwise indicated.

### Example I

A rubber composition composed of a blend of isoprene/butadiene copolymer rubber having a Tg of about -45°C, (IBR), cis 1,4-polybutadiene rubber (BR) and cis 1,4-polyisoprene rubber (NR) were prepared and identified herein as Sample W.

A similar rubber composition was prepared which included a halogenated copolymer of isobutylene/p-methylstyrene and identified herein as Sample X.

A rubber composition (compounded rubber) was prepared of a blend of isoprene/butadiene copolymer rubber (IBR), cis 1,4-polybutadiene rubber (BR), cis 1,4-polyisoprene natural rubber (NR) and emulsion polymerization prepared styrene/butadiene copolymer rubber (E-SBR) and referred to herein as Sample Y.

A similar rubber composition was prepared which included a halogenated copolymer of isobutylene/p-methylstyrene and identified herein as Sample Z.

The rubber compositions were prepared by mixing the ingredients in several stages, namely, two non-productive stages (without the curatives) and a productive stage (for the curatives), then the resulting composition was cured under conditions of elevated temperature and pressure.

All of the ingredients for the two non-productive mix stages were mixed in the first non-productive stage except for zinc oxide and antidegradants and 20 to 50 percent of the reinforcing fillers, primarily silica, with proportional amounts of coupler and processing oil, which were added in the second non-productive mixing stage.

The ingredients were mixed in each non-productive mixing stage to a temperature of 165°C for 5 minutes, all in a suitable rubber mixer. In the final, productive mix stage, the resulting rubber composition (mixture) was then mixed the curatives in a Banbury type mixer, namely, the accelerator(s) and sulfur to a temperature of 120°C for 3 minutes.

The rubber composition was then vulcanized at a temperature of 150°C for 18 minutes.

The rubber compositions were comprised of the ingredients illustrated in Table 1. Table 2 illustrates properties of the cured rubber compositions.

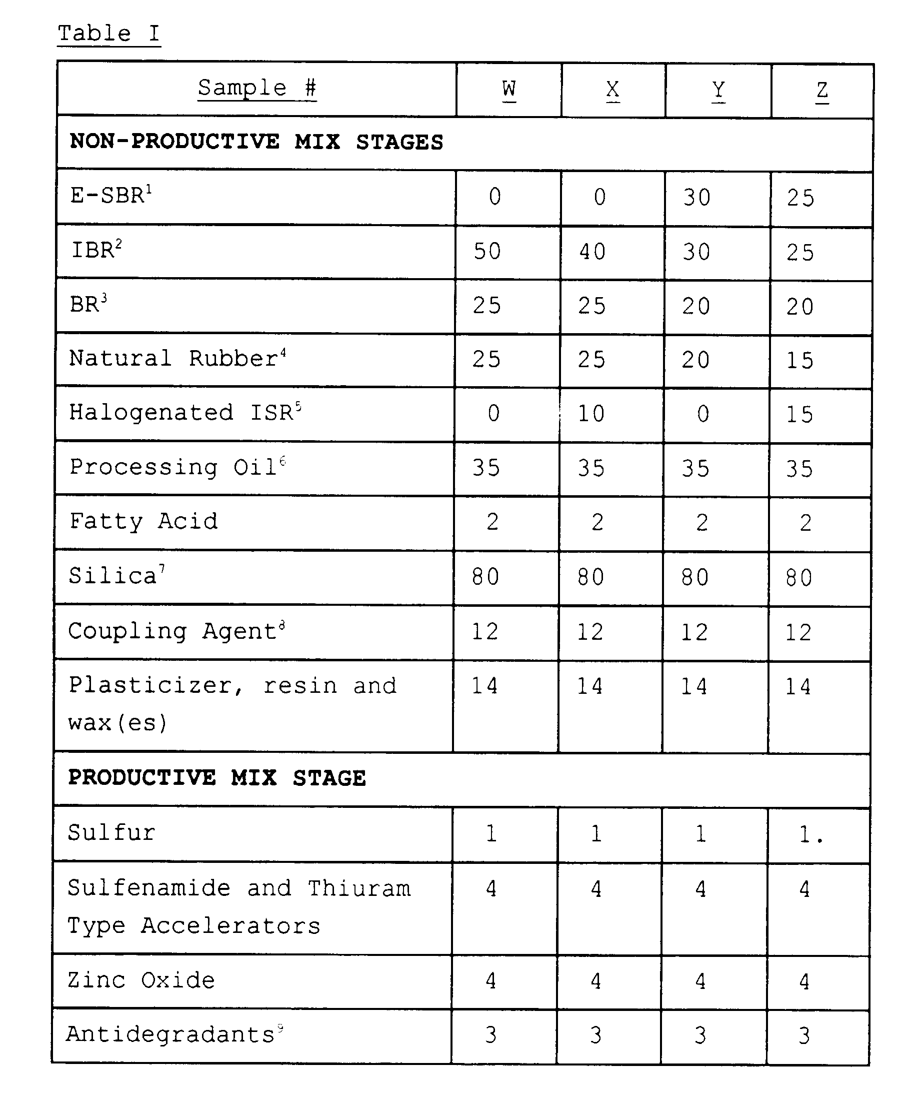

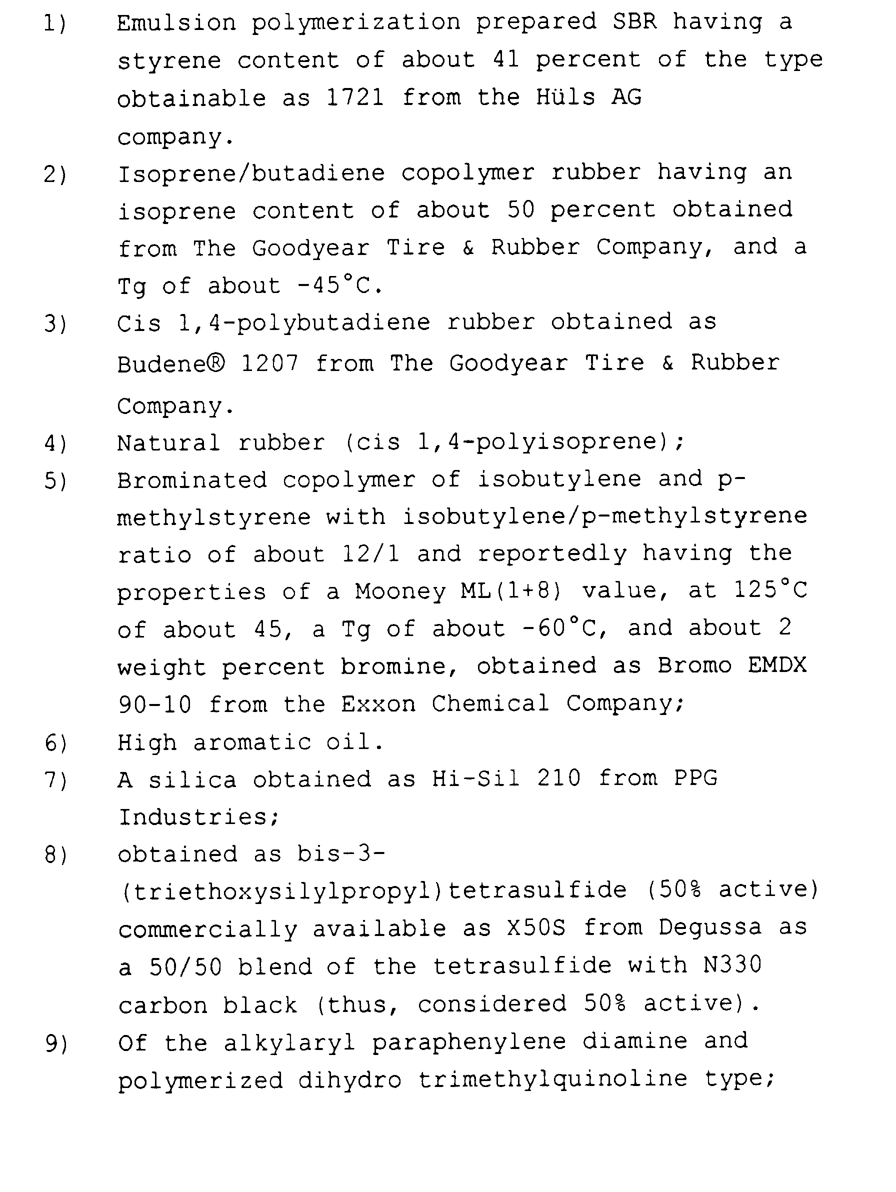

**Table II**

| Sample # | W | X | Y | Z |
|---|---|---|---|---|
| **RHEOMETER (150°C)** | | | | |
| Max. Torque (dNm) | 21.4 | 20.3 | 20.5 | 21.0 |
| Min. Torque (dNm) | 4.2 | 4.1 | 4.5 | 4.5 |
| T₉₀, minutes | 14.0 | 14.8 | 15.3 | 17.4 |
| T₂₅, minutes | 8.6 | 8.9 | 4.2 | 4.1 |

| **STRESS-STRAIN** | | | | |
|---|---|---|---|---|
| Tensile Strength, MPa | 14.6 | 13.1 | 14.5 | 12.9 |
| Elongation at Break, % | 528 | 478 | 537 | 460 |
| 100% Modulus, MPa | 2.3 | 2.5 | 2.3 | 2.7 |
| 300% Modulus, MPa | 8.2 | 8.5 | 8.3 | 8.8 |

| **REBOUND** | | | | |
|---|---|---|---|---|
| 100°C, (%) | 61 | 63 | 60 | 61 |
| 23°C (%) | 39 | 36 | 35 | 31 |

| **HARDNESS (SHORE A)** | | | | |
|---|---|---|---|---|
| 23°C | 66 | 66 | 66 | 65 |

| **DYNAMIC MECHANICAL PROPERTIES** | | | | |
|---|---|---|---|---|
| Tan Delta at 60°C | 0.092 | 0.093 | 0.093 | 0.096 |
| Tan Delta at 0°C | 0.203 | 0.246 | 0.219 | 0.282 |
| E* at 0°, MPa | 23.3 | 19.8 | 36.8 | 32.2 |
| DIN Abrasion Resistance (Relative Volume Loss, cc) | 85 | 65 | 122 | 141 |

These properties of the rubber compositions demonstrate that anticipated properties for a tire tread would be improved traction while maintaining rolling resistance and abrasion resistance when using halogenated ISR because tan delta at 0°C is increased and room temperature rebound is decreased and tan delta at 60°C, hot rebound and abrasion resistance is similar.

## Claims

1. A pneumatic tire having a tread rubber composition characterized by being comprised of (A) a combination of at least three elastomers comprised of (i) 10 to 80 weight percent of an isoprene/butadiene copolymer rubber containing 5 to 95 weight percent isoprene and having a Tg in a range of -5 to -95°C, (ii) 5 to 40 weight percent of cis 1,4-polyisoprene natural rubber, and (iii) 5 to 40 weight percent of a halogenated copolymer of isobutylene and p-methyl styrene where its isobutylene/p-methyl styrene ratio is in a range of 50/1 to 7/1, (B) 50 to 110 phr particulate precipitated silica, (C) at least one silica coupler having a moiety reactive with said silica and another moiety reactive with at least one of said elastomers, and (D) zero to 50 phr carbon black, wherein the weight ratio of silica to carbon black, if carbon black is used, is at least 1/1 where the total of silica and carbon black, if carbon black is used, is 60 to 120 phr.

2. The pneumatic tire of claim 1 having a tread rubber composition characterized by being comprised of (A) a combination of at least three elastomers comprised of (i) 35 to 70 weight percent of an isoprene/butadiene copolymer rubber containing 30 to 70 weight percent isoprene and having a Tg in a range of -35 to -50°C, or -70 to -90°C, (ii) 10 to 25 weight percent of cis 1,4-polyisoprene natural rubber, and (iii) 5 to 25 weight percent of a brominated copolymer of isobutylene and p-methyl styrene where its isobutylene/p-methyl styrene ratio is in a range of 20/1 to 9/1, (B) 50 to 85 phr particulate precipitated silica, (C) at least one silica coupler having a moiety reactive with said silica and another moiety reactive with at least one of said elastomers, and (D) up to 50 phr carbon black, wherein the weight ratio of silica to carbon black, if carbon black is used, is at least 1/1 where the total of silica and carbon black, if carbon black is used, is 70 to 90 phr; wherein said brominated copolymer of isobutylene and p-methylstyrene contains 1.5 to 2.5 weight bromine and has a Tg in a range of -50 to -60°C.

3. The pneumatic tire of claim 1 or 2 characterized in that said halogenated copolymer is a brominated copolymer of isobutylene and p-methylstyrene containing 1.5 to 2.5 weight bromine and has a Mooney viscosity value, ML(1+8) at 125°C in a range of 35 to 60 and a Tg in a range of -50 to -60°C.

4. The pneumatic tire of any of claims 1-3 characterized in that said tread composition contains both silica and carbon black and in that the weight ratio of silica to carbon black is in the range of 4/1 to 15/1.

5. The pneumatic tire of any of claims 1-4 characterized in that said tread rubber is comprised of (A) 20 to 80 weight percent of said combination of isoprene/butadiene copolymer, natural rubber and brominated copolymer of isobutylene and p-methylstyrene, and correspondingly (A') 80 to 20 weight percent of one additional elastomer selected from homopolymers of isoprene and 1,3-butadiene, copolymers of isoprene or butadiene with styrene or acrylonitrile and terpolymers of styrene/isoprene/butadiene and styrene/butadiene/acrylonitrile.

6. The pneumatic tire of claim 5 characterized in that the other elastomer (A') for said tread rubber is selected from at least one of cis 1,4-polybutadiene, medium vinyl (30-60 percent vinyl) polybutadiene, 3,4-polyisoprene, styrene/butadiene copolymer, styrene/isoprene/butadiene terpolymer and styrene/butadiene/acrylonitrile terpolymer.

7. The pneumatic tire of claim 6 characterized in that the styrene/butadiene copolymer elastomer is an organic solvent solution polymerization prepared copolymer.

8. The pneumatic tire of claim 6 characterized in that the styrene/butadiene copolymer elastomer is an emulsion polymerization prepared copolymer.

9. The pneumatic tire of any of claims 1-8 characterized in that said silica is characterized by having a DBP absorption value in a range of 200 to 400 cubic centimeters per 100 grams and a BET surface area in a range of 100 to 250 square meters per gram.

10. The pneumatic tire of claims 1 or 2 characterized in that the said coupler is a bis-3-(triethoxysilylpropyl) tetrasulfide.

## Patentansprüche

1. Luftreifen mit einer Laufflächen-Kautschukzusammensetzung, die dadurch gekennzeichnet ist, daß sie umfaßt (A) eine Kombination von mindestens drei Elastomeren, umfassend (i) 10 bis 80 Gewichtsprozent eines Isopren/Butadien-Copolymer-Kautschuks, der 5 bis 95 Gewichtsprozent Isopren enthält und eine Tg im Bereich von -5 bis -95°C aufweist, (ii) 5 bis 40 Gewichtsprozent cis-1,4-Polyisopren-Naturkautschuk und (iii) 5 bis 40 Gewichtsprozent eines halogenierten Copolymers von Isobutylen und p-Methylstyrol, worin das Verhältnis Isobutylen/p-Methylstyrol im Bereich von 50/1 bis 7/1 liegt, (B) 50 bis 110 ThK teilchenförmige gefällte Kieselsäure, (C) mindestens einen Kieselsäure-Kuppler mit einer mit Kieselsäure reaktiven Einheit und einer weiteren Einheit, die mit mindestens einem der besagten Elastomere reaktiv ist, und (D) 0 bis 50 ThK Ruß, wobei das Gewichtsverhältnis von Kieselsäure zu Ruß bei Verwendung von Ruß mindestens 1/1 beträgt und wobei Kieselsäure und Ruß, falls Ruß verwendet wird, insgesamt 60 bis 120 ThK betragen.

2. Luftreifen nach Anspruch 1 mit einer Laufflächenkautschuk-Zusammensetzung, die dadurch gekennzeichnet ist, daß sie umfaßt (A) eine Kombination von mindestens drei Elastomeren, umfassend (i) 35 bis 70 Gewichtsprozent eines Isopren/Butadien-Copolymer-Kautschuks, der 30 bis 70 Gewichtsprozent Isopren enthält und eine Tg im Bereich von -35 bis -50°C oder -70 bis -90°C aufweist, (ii) 10 bis 25 Gewichtsprozent cis-1,4-Polyisopren-Naturkautschuk und (iii) 5 bis 25 Gewichtsprozent eines bromierten Copolymers von Isobutylen und p-Methylstyrol, wobei das Verhältnis Isobutylen/p-Methylstyrol im Bereich von 20/1 bis 9/1 liegt, (B) 50 bis 85 ThK teilchenförmige gefällte Kieselsäure, (C) mindestens einen Kieselsäure-Kuppler mit einer mit Kieselsäure reaktiven Einheit und einer weiteren Einheit, die mit mindestens einem der besagten Elastomere reaktiv ist, und (D) bis zu 50 ThK Ruß, wobei das Gewichtsverhältnis von Kieselsäure zu Ruß bei Verwendung von Ruß mindestens 1/1 beträgt und wobei Kieselsäure und Ruß, falls Ruß eingesetzt wird, insgesamt 70 bis 90 ThK betragen; wobei das bromierte Copolymer von Isobutylen und p-Methylstyrol 1,5 bis 2,5 Gewichtsprozent Brom enthält und eine Tg im Bereich von -50 bis -60°C aufweist.

3. Luftreifen nach Anspruch 1 oder 2, dadurch gekennzeichnet, daß das halogenierte Copolymer ein bromiertes Copolymer von Isobutylen und p-Methylstyrol, das 1,5 bis 2,5 Gewichtsprozent Brom enthält und einen Mooney-Viskositätswert, ML(1+8) bei 125°C, im Bereich von 35 bis 60 und eine Tg im Bereich von -50 bis -60°C aufweist, ist.

4. Luftreifen nach irgendeinem der Ansprüche 1-3, dadurch gekennzeichnet, daß die Laufflächenzusammensetzung sowohl Kieselsäure als auch Ruß enthält und daß das Gewichtsverhältnis Kieselsäure zu Ruß im Bereich von 4/1 bis 15/1 liegt.

5. Luftreifen nach irgendeinem der Ansprüche 1-4, dadurch gekennzeichnet, daß der Laufflächenkautschuk umfaßt (A) 20 bis 80 Gewichtsprozent der Kombination von Isopren/Butadien-Copolymer, Naturkautschuk und bromiertem Copolymer von Isobutylen und p-Methylstyrol und entsprechend (A') 80 bis 20 Gewichtsprozent eines zusätzlichen Elastomers, das ausgewählt ist aus Homopolymeren von Isopren und 1,3-Butadien, Copolymeren von Isopren oder Butadien mit Styrol oder Acrylnitril und Terpolymeren von Styrol/Isopren/Butadien und Styrol/Butadien/Acrylnitril.

6. Luftreifen nach Anspruch 5, dadurch gekennzeichnet, daß das andere Elastomer (A') für den Laufflächenkautschuk aus mindestens einem von cis-1,4-Polybutadien, Polybutadien mit mittlerem Vinylgehalt (30-60 Prozent Vinyl), 3,4-Polyisopren, Styrol/Butadien-Copolymer, Styrol/Isopren/Butadien-Terpolymer und Styrol/Butadien/Acrylnitril-Terpolymer ausgewählt ist.

7. Luftreifen nach Anspruch 6, dadurch gekennzeichnet, daß das Styrol/Butadien-Copolymer-Elastomer ein durch Lösungspolymerisation in organischem Lösungsmittel hergestelltes Copolymer ist.

8. Luftreifen nach Anspruch 6, dadurch gekennzeichnet, daß das Styrol/Butadien-Copolymer-Elastomer ein durch Emulsionspolymerisation hergestelltes Copolymer ist.

9. Luftreifen nach irgendeinem der Ansprüche 1-8, dadurch gekennzeichnet, daß die Kieselsäure dadurch gekennzeichnet ist, daß sie einen DBP-Absorptionswert im Bereich von 200 bis 400 Kubikzentimeter pro 100 Gramm und eine BET-Oberfläche im Bereich von 100 bis 250 Quadratmeter pro Gramm aufweist.

10. Luftreifen nach Anspruch 1 oder 2, dadurch gekennzeichnet, daß der Kuppler ein Bis-3-(triethoxysilylpropyl)tetrasulfid ist.

## Revendications

1. Bandage pneumatique possédant une composition de caoutchouc de bande de roulement caractérisée par le fait qu'elle comprend (A) une combinaison d'au moins trois élastomères comprenant (i) de 10 à 80 pour cent en poids d'un caoutchouc de copolymère d'isoprène/butadiène contenant de 5 à 95 pour cent en poids d'isoprène et possédant une Tg dans le domaine de -5 à -95°C, (ii) de 5 à 40 pour cent en poids de caoutchouc naturel de cis-1,4-polyisoprène et (iii) de 5 à 40 pour cent en poids d'un copolymère halogéné d'isobutylène et de p-méthylstyrène, le rapport isobutylène/p-méthylstyrène se situant dans le domaine de 50/1 à 7/1, (B) de 50 à 110 phr de silice précipitée sous forme particulaire, (C) au moins un agent de couplage de silice possédant une fraction réactive avec ladite silice et une autre fraction réactive avec au moins un desdits élastomères, et (D) de 0 à 50 phr de noir de carbone, le rapport pondéral de la silice au noir de carbone, si on utilise du noir de carbone, étant d'au moins 1/1 et la quantité totale de silice et de noir de carbone, si on utilise du noir de carbone, étant de 60 à 120 phr.

2. Bandage pneumatique selon la revendication 1, possédant une composition de caoutchouc de bande de roulement caractérisée par le fait qu'elle comprend (A) une combinaison d'au moins trois élastomères comprenant (i) de 35 à 70 pour cent en poids d'un caoutchouc de copolymère d'isoprène/butadiène contenant de 30 à 70 pour cent en poids d'isoprène et possédant une Tg dans le domaine de -35 à -50°C ou de -70 à -90°C, (ii) de 10 à 25 pour cent en poids de caoutchouc naturel de cis-1,4-polyisoprène et (iii) de 5 à 25 pour cent en poids d'un copolymère bromé d'isobutylène et de p-méthylstyrène, le rapport isobutylène/p-méthylstyrène se situant dans le domaine de 20/1 à 9/1, (B) de 50 à 85 phr de silice précipitée sous forme particulaire, (C) au moins un agent de couplage de silice possédant une fraction réactive avec ladite silice et une autre fraction réactive avec au moins un desdits élastomères, et (D) jusqu'à 50 phr de noir de carbone, le rapport pondéral de la silice au noir de carbone, si on utilise du noir de carbone, étant d'au moins 1/1 et la quantité totale de silice et de noir de carbone, si on utilise du noir de carbone, étant de 70 à 90 phr; dans lequel ledit copolymère bromé d'isobutylène et de p-méthylstyrène contient de 1,5 à 2,5 pour cent en poids de brome et possède une Tg dans le domaine de -50 à -60°C.

3. Bandage pneumatique selon la revendication 1 ou 2, caractérisé en ce que ledit copolymère halogéné est un copolymère bromé d'isobutylène et de p-méthylstyrène contenant de 1,5 à 2,5 pour cent en poids de brome et possède un indice de viscosité de Mooney ML(1+8) à 125°C dans le domaine de 35 à 60 et une Tg dans le domaine de -50 à -60°C.

4. Bandage pneumatique selon l'une quelconque des revendications 1 à 3, caractérisé en ce que ladite composition de bande de roulement contient à la fois de la silice et du noir de carbone, et en ce que le rapport pondéral de la silice au noir de carbone se situe dans le domaine de 4/1 à 15/1.

5. Bandage pneumatique selon l'une quelconque des revendications 1 à 4, caractérisé en ce que ledit caoutchouc de bande de roulement comprend (A) de 20 à 80 pour cent en poids de ladite combinaison de copolymère d'isoprène/butadiène, de caoutchouc naturel et de copolymère bromé d'isobutylène et de p-méthylstyrène et, de manière correspondante, (A') de 80 à 20 pour cent en poids d'un élastomère supplémentaire choisi parmi des homopolymères de l'isoprène et du 1,3-butadiène, des copolymères d'isoprène ou de butadiène avec du styrène ou de l'acrylonitrile et des terpolymères de styrène/isoprène/butadiène et de styrène/butadiène/acrylonitrile.

6. Bandage pneumatique selon la revendication 5, caractérisé en ce que l'autre élastomère (A') pour ledit caoutchouc de bande de roulement est choisi parmi au moins un des élastomères ci-après: le cis-1,4-polybutadiène, le polybutadiène à teneur vinylique moyenne (30-60 pour cent de groupes vinyle), le 3,4-polyisoprène, un copolymère de styrène/butadiène, un terpolymère de styrène/isoprène/butadiène et un terpolymère de styrène/butadiène/acrylonitrile.

7. Bandage pneumatique selon la revendication 6, caractérisé en ce que l'élastomère de copolymère de styrène/butadiène est un copolymère préparé par polymérisation en solution dans un solvant organique.

8. Bandage pneumatique selon la revendication 6, caractérisé en ce que l'élastomère de copolymère de styrène/butadiène est un copolymère préparé par polymérisation en émulsion.

9. Bandage pneumatique selon l'une quelconque des revendications 1 à 8, caractérisé en ce que ladite silice est caractérisée par le fait qu'elle possède une valeur d'absorption DBP dans le domaine de 200 à 400 centimètres cubes par 100 grammes et une aire de surface BET dans le domaine de 100 à 250 mètres carrés par gramme.

10. Bandage pneumatique selon la revendication 1 ou 2, caractérisé en ce que ledit agent de couplage est un bis-3-(triéthoxysilylpropyl)tétrasulfure.
